# EUROPEAN PATENT SPECIFICATION

(11) **EP 1 235 321 B1**
(45) Date of publication and mention of the grant of the patent: **06.06.2007**
(21) Application number: 02380037.8
(22) Date of filing: 20.02.2002
(51) Int. Cl.: H02B 1/01

(54) **Frame for cupboards**
Gestell für Schrank
Bâti pour armoire

(30) Priority: 21.02.2001 ES 200100389
(43) Date of publication of application: 28.08.2002
(73) Proprietor: Retex, S.A., 08902 L'Hospitalet de Llobregat (ES)
(72) Inventor: Figueras Quesada, Antonio, 08902 L'Hospitalet de Llobregat (ES)
(74) Representative: Isern-Jara, Nuria

(56) References cited:
- EP-A- 1 054 492
- GB-A- 2 337 448

## Description

### Technical sector of the invention

The object of the invention is a frame for cupboards, particularly for electrical cupboards of the type which are generally straight parallelepipedic, rectangular in shape, and formed of columns, cross-pieces and beams, preferably obtained by aluminium extrusion.

### Background of the invention

There are many known embodiments of electrical cupboards for the housing of elements designed for the handling, command and control of installations. In essence, electrical cupboards are composed of a frame, generally parallelopipedic in shape, on which any number of panels are mounted to constitute the side walls. The frame is made up of sections, for example sections obtained by aluminium extrusion, with four columns, the corresponding upper and lower ends of which are connected by means of respective horizontal crosspieces and beams, two pairs in the upper part and two pairs in the lower part, arranged at right angles to each other and to the columns.

The electrical cupboards described previously are substantial both in size and weight, even before the arrangement inside of the electrical material for which they are designed, all of which implies considerable difficulties in transporting the cupboard from its source to its final placement on site. Such difficulties are greatly reduced if the cupboard is transported unassembled from source to destination, but this requires assembly on site, which entails considerable disadvantages; specifically an assembly cost which increases substantially the cost of the cupboard.

Until the present, the known embodiments of frames for collapsible electrical cupboards are based on the use of screws to connect the crosspieces and beams to the columns; a large number of these are required to ensure the stability and rigidity of the frame, and consequently of the cupboard.

Document EP-A-1 054 492 discloses a frame for cupboards according to the preamble of claim 1. The object of the present invention is accomplished by providing a frame for cupboards comprising the features of claim 1.

### Brief description of the drawings

The attached drawings illustrate, purely as a non restrictive example, one form of embodiment of the frame for cupboards according to the invention. In these drawings:
Fig. 1 is an elevated view of a column, a crosspiece and a beam in a position prior to their coupling;
Fig. 2 is the corresponding view of the section II-II of Fig. 1;
Fig. 3 is a side view of one end of the beam in Fig. 1;
Fig. 4 is a side view of one end of the column in Fig. 1;
Figs. 5 and 6 are respective side views of a coupling pin; and
Figs. 7 and 8 are respective cross-sectional views of the coupling of the beam to the column in Fig 1.

### Detailed description of the drawings

The frame for cupboards according to the invention which as an example of embodiment is described, is basically comprised of four columns, four crosspieces and four beams, of which two crosspieces and two beams link the upper ends of the columns, while the lower ends of the columns are similarly linked by means of another two crosspieces and two beams, thus configuring a frame which is generally parallelopipedic in shape.

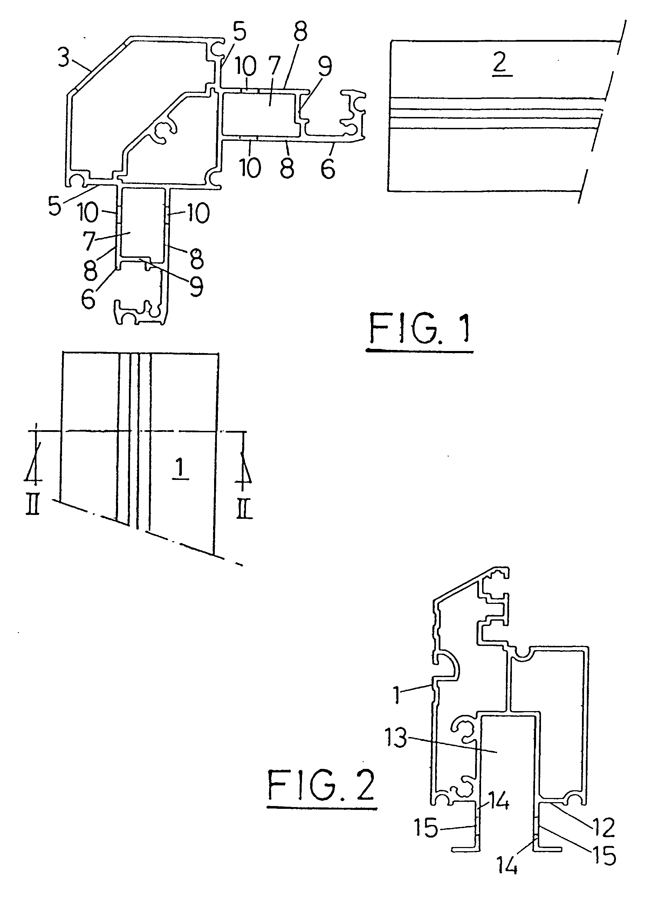

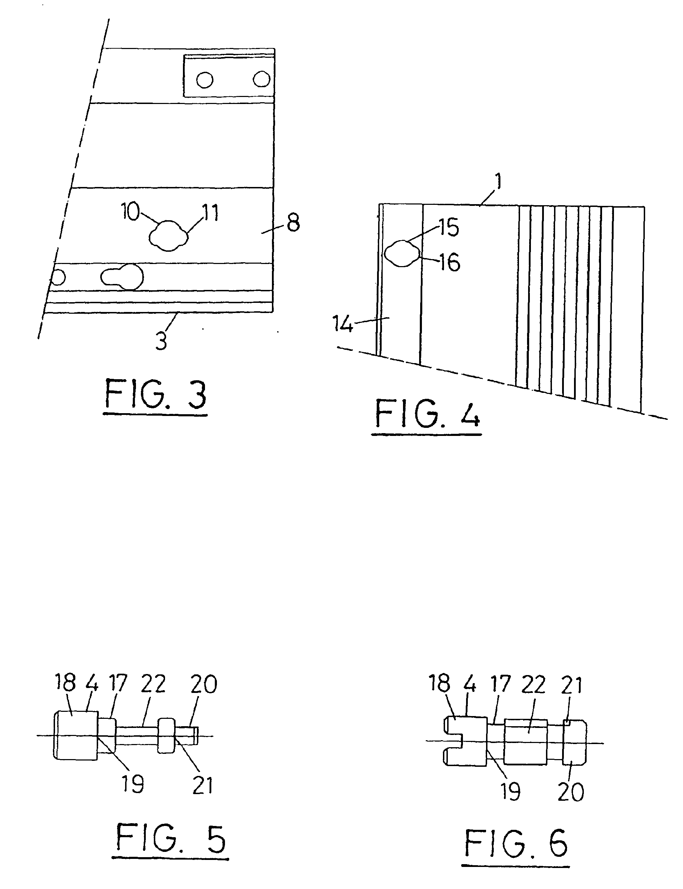

Given these premises, Fig. 1 shows one of the eight vertexes of the aforementioned frame, comprised of one end of a column 1, one end of a crosspiece 2, and one end of a beam 3, coupled to each other by means of respective coupling pins, one of which has been represented in Figs. 5 and 6. The columns 1 and crosspieces 2 have an equal cross-section, which is detailed in Fig. 2.

In Fig. 1 it can be seen that the beam 3 has a cross-section in which the two sides 5 which are opposite the columns 1 and the crosspieces 2 form a right angle to each other. Each side 5 has a longitudinal wing 6 arranged at right angles to the aforementioned side, which extends along the entire length of the beam 3, in such a way that both wings 6 are arranged forming an angle of 90° to each other. Each wing 6 has a longitudinal channel 7 whose cross-section is generally rectangular in shape, delimited by two side walls 8 arranged perpendicular to the beam, by a front wall 9 parallel to the beam, and by the beam itself.

Each side wall 8 has a through hole 10 with a radial recess 11 in its perimeter, which extends parallel to the longitudinal wing 6 as can be seen in Fig. 3, both holes being equal to each other and arranged coaxially with respect to each other.

The columns 1 and the crosspieces 2 have a cross-section whose side 12, which is opposite the column or crosspiece which is its counterpart in the frame, has a longitudinal housing 13 which has a concave cross-section and a general U shape, whose parallel arms 14 are perpendicular to the side 12, all of which can be seen in Fig. 2. The housing 13 is adapted so that the longitudinal wings 6 of the beams 3 fit tightly inside, so that each beam 3 is arranged at a right angle to the corresponding adjacent crosspiece or column.

In Figs. 2 and 4 it can be seen that each arm 14 has a through hole 15, with a radial recess 16 in its perimeter which extends crosswise to the housing 13, with both the holes 15 and recesses 16 equal to each other and arranged coaxially to each other. This point indicates that the holes 15 of the arms 14 of the U-shaped housing 13 can be of smaller diameter than the holes 10 of the side walls 8 of the wings 6.

In Figs. 5 and 6 it can be seen that the coupling pin 4 comprises a first cylindrical portion 17, which links axially with a second cylindrical portion 18 of greater diameter, so that the linking of both cylindrical portions of different diameter forms a torque step 19. In addition, the first cylindrical portion 17 is of smaller diameter than the through holes 10 of the side walls 8 of the wings 6 of the beams 3.

The first cylindrical portion 17 has at its upper end a lateral torque cam 20 with an inclined torque plane 21, while in its central portion it has a lateral torque cam 22, preferably formed of a domed protuberance.

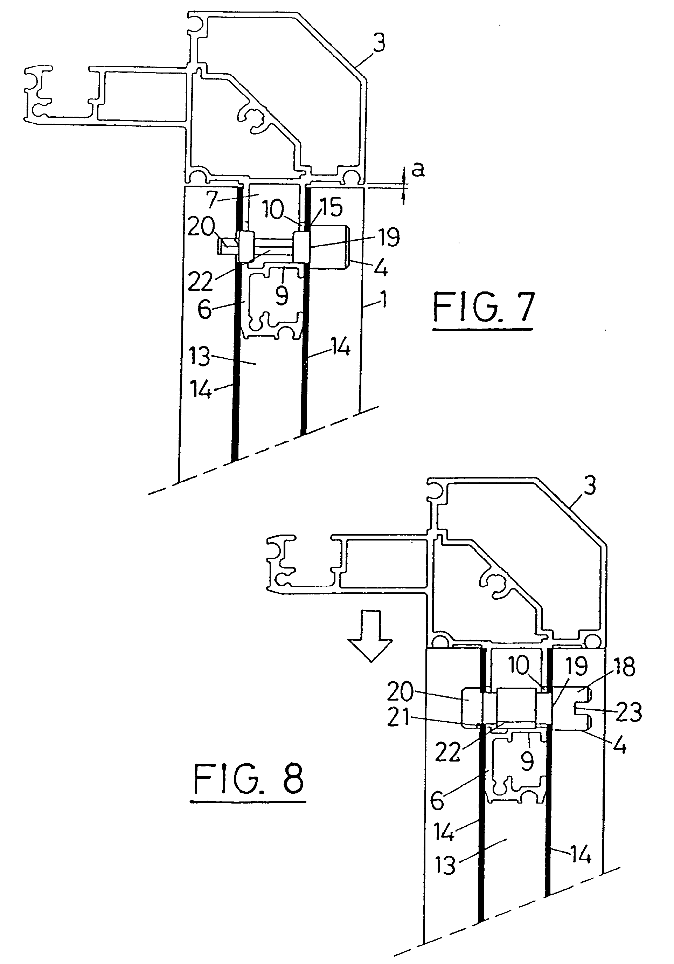

The assembly of the frame for cupboards according to the invention which as an example of embodiment has been described, is extremely simple and is explained as follows with reference to Figs. 7 and 8.

Fig. 7 shows a sectional representation of the coupling of the beam 3 to the end of the column 1 illustrated in Fig. 1, with the coupling performed in the manner detailed as follows. Firstly, the wing 6 is positioned in the longitudinal housing 13, so that both elements are arranged at right angles to each other, the dimensions of the wing and the housing being such that they allow the wing 6 to fit tightly in the housing 13, i.e. maintaining a relative position which is sufficiently stable and rigid to allow assembly of the remaining elements of the frame. Once the beam 3 is coupled to the column 1 in the manner described, the through holes 10 and 15 of the wing and of the beam, respectively, are arranged opposite each other, thus allowing the coupling pin 4 to be passed through them; the coupling pin is positioned with its lateral thrust cam 22 opposite the front wall 9 of the longitudinal channel 7, while the arms 14 of the column and the wing 6 of the beam are arranged between the torque step 19 and the lateral torque cam. Fig. 7 shows how, when assembly is carried out as described, the beam 3 is arranged at a relatively short distance "a" from the column 1.

Next, the coupling pin 4 is rotated, preferably using an implement or tool introduced into the slot 23 provided for the purpose in the second cylindrical portion 18 of the pin. When the pin is rotated around its own axis, the cams 20 and 22 operate simultaneously so that the lateral thrust cam 22 presses against the front wall 9 of the beam 3, exerting pressure on the latter, indicated by an arrow in Fig. 8, which brings it closer to the column 1 causing the distance "a" indicated in Fig. 7 to disappear, and the outer edges of the arms 14 make contact with the column 1 and apply pressure to it, the aforementioned movement being possible because of the greater diameter of the holes 10 of the wing 6. On the other hand, the inclined torque plane 21 of the lateral torque cam 20 slides across the arm 14 of the column, this sliding causing the compression of the arms 14 against the wing 6 arranged inside the housing 13, as the aforementioned arms 14 are trapped between the lateral torque cam itself and the torque step 19.

The described method of coupling the beam to the column is equally applicable to the coupling of crosspieces and beams, the result of which is that the frame for cupboards according to the invention requires only the positioning of crosspieces and columns with respect to the beams, with no implements or tools required, the whole remaining fixed thanks to the coupling pins, which greatly simplifies the assembly of the frame, which can be carried out easily by non-specialized personnel.

## Claims

1. Frame for cupboards, particularly for electrical cupboards of the type which are generally parallelepipedic in shape, and formed of columns (1), cross-pieces (2) and beams (3), preferably obtained from extruded aluminium sections, the corresponding ends of the columns (1) being linked by crosspieces and beams (3) arranged at right angles to each other and to the columns (1), having each of the beams (3) two equal longitudinal wings (6) arranged at right angles to each other, each longitudinal wing (6) including a longitudinal tubular channel (7), with a cross section which is essentially rectangular in shape, delimited by two side walls (8) arranged at right angles to the beam, by a front wall (9) parallel to the beam and by the beam itself; and having each column (1) and each crosspiece (2) a longitudinal housing (13) with a concave cross-section and a general U shape, adapted so that the aforementioned longitudinal wings (6) fit tightly in the cavity and so that the column or crosspiece is arranged forming an angle of 90° to the beam; and having each end of the longitudinal wings 86) and each end of the longitudinal housings (13) additional means of coupling (10-11, 15-16, 4) which, once the longitudinal wing (6) is arranged in a longitudinal housing (13), exert a permanent coaxial action on the beam (3), keeping it close to the column or crosspiece (2), **characterized in that** the side walls (8) have respective through and coaxial circular holes (10) for coupling, arranged coaxially to each other, the perimeter of each of which has a radial recess (11) arranged in parallel to the longitudinal wing (6) and opposite the other radial recess,
**in that** the means of coupling include in the arms (14) of the U-shaped longitudinal housing (13) respective through and coaxial circular holes (15), of a smaller diameter than that of the holes (10) in the longitudinal wings of the beam, the perimeter of each through hole having a radial recess (16) which extends transversally to the column or crosspiece and is arranged opposite the other radial recess,
and **in that** the means of coupling include a coupling pin (4) which has a first portion (17) which is essentially cylindrical in shape which links axially with a second portion (18) which is also essentially cylindrical and of a larger diameter, determining a torque step (19), of which the first cylindrical portion (17) has a smaller diameter than that of the through holes (10) of the side walls (8) of the tubular channel (7) of the longitudinal wing (6) and has in its internal end at least one lateral thrust cam (22), while the second cylindrical portion (1), which corresponds to its outer end, comprises means of actioning (23), the whole of which is adapted in such a way that, once the longitudinal wing (6) of a beam (3) is positioned in the U-shaped longitudinal coupling (13) of a column (1) or crosspiece (2), their respective through holes and recesses (10-11, 15-16) are opposite each other and disposed coaxially, allowing the coupling pin (4) to pass through them, so that the arms (14) of the longitudinal U-shaped housing (13) and the longitudinal wing (6) are arranged between the lateral torque cam (20) and the torque step (19) of the pin (4), while the lateral thrust cam (22) is positioned parallel to the front wall (9) of the tubular channel (7) of the longitudinal wing (6), causing the coupling pin (4) to rotate, the lateral thrust cam (22) to press against the aforementioned front wall (9) and a thrusting action on the beam (3) which presses it in the direction of the column (1) or crosspiece (2), at the same time as the torque cam (21) and the torque step (19) compress the aforementioned arms (14), pressing them against the wing (6).

## Patentansprüche

1. Gestell für Schränke, insbesondere Schaltschränke, der Art, die im Allgemeinen parallelepidförmig sind und aus Ständern (1), Querträgern (2) und Längsträgern (3) bestehen, vorzugsweise auf der Grundlage von stranggepressten Aluminiumprofilen gefertigt, wobei die entsprechenden Ständerenden (1) durch orthogonal zueinander und in Bezug auf die Ständer (1) angeordnete Querträger und Längsträger (3) verbunden werden, wobei jeder der Längsträger (3) mit zwei im rechten Winkel zueinander angeordneten, gleichen Längsflügeln (6) ausgestattet ist, jeder Längsflügel (6) einen Längsrohrdurchgang (7) aufweist, der von zwei in Bezug auf den Längsträger orthogonal angeordneten Seitenwänden (8), einer parallel zu dem Längsträger verlaufenden Vorderwand (9) und dem Längsträger selbst abgegrenzt wird; und wobei jeder Ständer (1) und jeder Querträger (2) über eine Längsaussparung (13) im konkaven Querschnitt und in allgemeiner Form in U-Kontur verfügt, dafür ausgelegt, in seinem Hohlraum festsitzend besagte Längsflügel (6) aufzunehmen, sodass der Ständer oder Querriegel so angeordnet bleibt, dass er bezüglich des Längsträgers einen 90°-Winkel bildet; und wobei jedes Ende der Längsflügel (6) und jedes Ende der Längsaussparungen (13) über zusätzliche Befestigungsmittel (10-11, 15-16, 4) verfügen, die sobald ein Längsflügel (6) in einer Längsaussparung (13) ruht, auf den Längsträger (3) ständig eine Achskraft der Annäherung an den Ständer oder Querträger (2) ausüben, **dadurch gekennzeichnet, dass** die Seitenwände (8) für die Befestigung mit entsprechenden, untereinander koaxial angeordneten Durchstreck- und Koaxialrundlöcher (10) ausgestatten sind, deren Kontur jeweils über eine parallel am Längsflügel (6) und einer anderen Radialeinsenkung gegenüber angeordnete Radialeinsenkung (11) verfügt; **dadurch gekennzeichnet, dass** die Befestigungsmittel an den Armen (14) der Längsaussparung (13) in U-Form die entsprechenden Durchsteck- und Koaxialrundlöcher (15) beinhalten, mit geringerem Durchmesser als die Löcher (10) der Längsflügel des Längsträgers, wobei die Kontur jedes Lochs über eine Radialeinsenkung (16) verfügt, die sich quer zum Ständer oder Querträger fortsetzt und gegenüber der anderen Radialeinsenkung angeordnet ist; und **dadurch gekennzeichnet, dass** die Befestigungsmittel einen Befestigungsstift (4) beinhalten, der über einen ersten, im wesentlichen zylindrischen Abschnitt (17) verfügt, der axial mit einem zweiten auch im wesentlichen zylindrischen Abschnitt (18) größeren Durchmessers verbindet, wodurch eine Klemmsprosse (19) bestimmt wird, von denen der erste Zylinderabschnitt (17) einen geringeren Durchmesser als die Durchstecklöcher (10) der Seitenwände (8) des Rohrdurchgangs (7) des Längsflügels (6) aufweist und an seinem Innenrand über mindestens eine seitliche Vorschubnocke (22) verfügt, während der zweite Zylinderabschnitt (18), der dem Außenrand entspricht, einige Antriebsmittel (23) beinhaltet, die allesamt so vorgesehen sind, dass nach Einrasten des Längsflügels (6) eines Längsträgers (3) in der Längsaussparung in U-Form (13) eines Ständers (1) oder Querträgers (2) ihre entsprechenden Durchsteck- und Einsenkungslöcher (10-11, 15-16) gegenüber und koaxial angeordnet sind, wodurch sie das Durchstecken des Befestigungsstifts (4) durch sie hindurch ermöglichen, wodurch die Arme (14) der Längsaussparung in U-Form (13) und der Längsflügel (6) zwischen der Klemmseitennocke (20) und der Klemmsprosse (19) des Stifts (4) angeordnet sind, während die Vorschubseitennocke (22) parallel zur Vorderwand (9) des Rohrdurchgangs (7) des Längsflügels (6) steht, wobei die Drehung des Befestigungsstifts (4) das Aufsetzen der Vorschubseitennocke (22) auf besagter Vorderwand (9) und eine vorschiebende Wirkung auf den Längsträger herbeiführt, die ihn gegen den Ständer (1) oder Querträger (2) drückt, während gleichzeitig die Klemmnocke (21) und die Klemmsprosse (19) besagte Arme (14) unter Druck setzen, indem sie sie gegen den Flügel (6) pressen.

## Revendications

1. Bâti pour armoires, en particulier pour les armoires électriques ayant généralement une forme parallélépipédique, formées de montants (1), de pièces transversales (2) et de poutrelles (3), de préférence obtenus de sections en aluminium extrudé, les extrémités correspondantes des montants (1) étant reliées par des pièces transversales et des poutrelles (3) disposées en angle droits les unes par rapport aux autres et aux montants (1), chaque poutrelle (3) ayant deux ailes (6) égales longitudinales disposées en angle droit les unes par rapport aux autres, chaque aile (6) longitudinale comprenant un canal tubulaire longitudinal (7) avec une section transversale qui a une forme essentiellement rectangulaire, délimitée par deux parois latérales (8) disposées en angle droit par rapport à la poutrelle, par une paroi avant (9) parallèle à la poutrelle et par la poutrelle elle-même ; chaque montant (1) et chaque pièce transversale (2) ont un logement longitudinal (13) avec une section transversale concave et une forme générale en U, adaptés de sorte à ce que les ailes longitudinales (6) mentionnées s'adaptent fermement dans la cavité et que le montant ou la pièce transversale soient disposés de sorte à former un angle de 90º par rapport à la poutrelle ; chaque extrémité des ailes longitudinales (6) et chaque extrémité des logements longitudinaux (13) ont des moyens supplémentaires d'accouplement (10-11, 15-16, 4) qui, quand l'aile longitudinale (6) est fixée dans le logement longitudinal (13) exercent une action coaxiale permanente sur la poutrelle (3), la maintenant contre le montant ou pièce transversale (2), **caractérisé par le fait que** les parois latérales (8) ont respectivement des trous circulaires (10) traversants et coaxiaux pour l'accouplement, disposés coaxialement les uns par rapport aux autres, dont le périmètre a une cavité radiale (11) disposée parallèlement à l'aile longitudinale (6) et opposée à l'autre cavité radiale ; **caractérisé par le fait que** les moyens d'accouplement comprennent dans les bras (14) du logement longitudinal en forme de U (13) respectivement des trous circulaires traversants et coaxiales (15), d'un diamètre plus petit que celui des trous (10) dans les ailes longitudinales de la poutrelle, le périmètre de chaque trou traversant ayant une cavité radiale (16) qui s'étend transversalement vers le montant ou la pièce transversale et qui est disposée de manière opposée à l'autre cavité radiale; **caractérisé par le fait que** les moyens d'accouplement comprennent une broche d'accouplement (4) qui a une première partie (17) qui a une forme essentiellement cylindrique qui est reliée axialement à une seconde partie (18) qui est aussi essentiellement cylindrique et d'un diamètre plus grand, déterminant un pas de couple (19) dont la première partie cylindrique (17) a un diamètre plus petit que celui des trous traversants (10) des parois latérales (8) du canal tubulaire (7) de l'aile longitudinale (6) et qui a, à son extrémité interne, au moins une came de poussée latérale (22) alors que la seconde partie cylindrique (1), qui correspond à son extrémité supérieure, comprend des moyens d'actionnement (23), dont le trou est adapté de sorte que, quand l'aile longitudinale (6) de la poutrelle (3) est placée dans l'accouplement longitudinal en U (13) du montant (1) ou de la pièce transversale (2), leurs respectifs trous traversants et cavités (10-11, 15-16) sont opposés les uns par rapport aux autres et disposés coaxialement, permettant à la broche d'accouplement (4) de passer à travers ceux-ci, de sorte que les bras (14) du logement longitudinal en U (13) et l'aile longitudinale (6) sont disposés entre la came à couple latérale (20) et le pas de couple (19) de la broche (4), alors que la came de poussée latérale (22) est placée parallèlement à la paroi avant (9) du canal tubulaire (7) de l'aile longitudinale (6), provoquant la rotation de la broche d'accouplement (4), la pression de la came de poussée latérale (22) contre la paroi avant (9) mentionnée et une action de poussée sur la poutrelle (3) qui la pousse dans la direction du montant (1) ou de la pièce transversale (2), en même temps que la came à couple (21) et le pas de couple (19) compressent les bras (14) mentionnés, les poussant contre l'aile (6).
